# EUROPÄISCHE PATENTSCHRIFT

(11) **EP 0 491 657 B1**
(45) Veröffentlichungstag und Bekanntmachung des Hinweises auf die Patenterteilung: **02.11.1995**
(21) Anmeldenummer: 91810937.2
(22) Anmeldetag: 03.12.1991
(51) Int. Cl.: G05B 19/418, G05B 19/12

(54) **Automatische Fabrikationsanlage**
Automatic manufacturing system
Dispositif de fabrication automatique

(30) Priorität: 18.12.1990 CH 4002/90; 21.11.1991 CH 3409/91
(43) Veröffentlichungstag der Anmeldung: 24.06.1992
(60) Teilanmeldung: 94810712.3
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 364 138
- DE-A- 3 720 157

## Beschreibung

Die vorliegende Erfindung betrifft ein Verfahren zum Bearbeiten von Werkstücken in einer automatischen Fertigungsanlage mit numerisch gesteuerten Bearbeitungseinrichtungen (10), wobei die Werkstücke auf Paletten montiert werden, an denen auf die Werkstücke und deren Bearbeitung bezügliche Daten elektronisch gespeichert werden.

Ferner betrifft die Erfindung eine automatische Fertigungsanlage mit numerisch gesteuerten Bearbeitungseinrichtungen, mit den Bearbeitungseinrichtungen einzeln zugeordneten Steuereinheiten, mit Werkzeugen zur Komplettbearbeitung von Werkstücken, mit Magazinen zur Aufbewahrung der Werkzeuge und der Werkstücke, mit den Bearbeitungseinrichtungen zugeordneten Handhabungsgeräten für die Beschickung der Bearbeitungseinrichtungen mit Werkstücken und für den Werkzeugaustausch sowie mit wenigstens einem Messplatz, welcher für die Voreinstellung und Prüfung des Zustandes der Werkstücke bzw. Werkzeuge eingerichtet ist.

Das Ziel der Erfindung ist es, im Zusammenhang mit der Überwachung und Steuerung des Produktionsablaufs einer derartigen Fertigungsanlage ein leistungsfähiges System für den Informationsfluss zwischen den verschiedenen Anlageeinheiten und den Werkstücken bzw. Werkzeugen zu schaffen, welches in verhältnismässig einfacher Weise eine flexible, insbesondere auftragsbe zogene Fertigung mit vielen verschiedenen Werkstücken in kleinen Losgrössen ermöglicht. Insbesondere hat die Erfindung ein verbessertes Identifikationssystem zum Ziel. Ferner soll das Informationssystem geeignet sein, auf dem Wege der Identifikation auch andere, z.B. die Fertigung steuernde Informationen zu übertragen.

Aus der Patentschrift Nr. DE-A1-37 20 157 ist eine Fabrikationsanlage ähnlicher Art bekannt, bei der die für die Bearbeitung von Werkstücken erforderlichen Bearbeitungsdaten in einfacher Weise einem Bearbeitungswerkzeug zur Verfügung gestellt werden sollen. Die zu bearbeitenden Werkstücke sind einzeln oder gruppenweise von Paletten aufgenommen, an denen jeweils ein Speichermodul angebracht ist, in welchem die gesamten erforderlichen Bearbeitungsdaten gespeichert sind. Diese Bearbeitungsdaten werden beim Einrichten der Paletten in einem Palettenlager von einem RC-Band einer stationären Bandspeichereinrichtung in das Speichermodul der Paletten übertragen. Bei der Übergabe einer mit Werkstücken versehenen Palette an eine Bearbeitungseinrichtung werden die Bearbeitungsdaten aus dem jeweiligen Speichermodul der Palette gelesen und der Steuereinrichtung der betreffenden Bearbeitungseinrichtung zugeführt. Die für die Bearbeitung der Werkstücke erforderlichen Werkzeuge werden der Bearbeitungseinrichtung auf anderem Wege zugeführt; von Paletten und Speichermodulen ist in diesem Zusammenhang keine Rede.

Ein wesentlicher Nachteil dieser bekannten Fabrikationsanlage besteht darin, dass für jede Werkstückpalette ein umfangreiches Datenpaket mit den gesamten vorprogrammierten Bearbeitungsdaten mehrmals umgesetzt werden muss, bis diese Daten zur Steuereinrichtung einer Bearbeitungseinrichtung gelangen. Dieser Umstand gefährdet die Übertragungssicherheit. Ferner sind offenbar keine Massnahmen getroffen, die es bei einer mehrfach bestückten Werkstückpalette ermöglichten, die einzelnen Werkstücke datenmässig individuell zu erfassen, so dass alle Werkstücke einer Palette einzig nach einem einheitlichen Bearbeitungsprogramm bearbeitet werden, ohne Rücksicht auf allfällige Mass- und Positionsabweichungen der Werkstücke. Extrem hohe Bearbeitungsgenauigkeiten sind auf diese Weise nicht erreichbar. Ein weiterer Nachteil ergibt sich dadurch, dass die an den Paletten angebrachten Speichermodule für die Aufnahme der gesamten Bearbeitungsdaten eine ziemlich hohe Speicherkapazität benötigen. Ausserdem ist es praktisch unumgänglich, dass in einer Fabrikationsanlage mit mehreren Fertigungsstationen alle diese Fertigungsstationen mit einem einheitlichen Betriebssystem arbeiten, um einen reibungslosen Betrieb zu ermöglichen, da eine jeweilige Übersetzung der umfangreichen Datenprotokolle zu umständlich wäre.

Mit dem erfindungsgemässen Verfahren lassen sich die erwähnten Nachteile dadurch vermeiden, dass in einer jeder Bearbeitungseinrichtung (10) einzeln zugeordneten Steuereinheit (30) eine Mehrzahl von Bearbeitungsprogrammen elektronisch gespeichert wird, dass jedes Werkstück (35) vor seinem Einsatz in eine Be arbeitungseinrichtung (10) auf der Palette vermessen wird, wobei die Position des Werkstücks bezüglich seiner Palette (36) bzw. der Versatz desselben gegenüber einem der Palette zugeordneten Bezugssystem festgestellt wird, dass an der Palette (36) eine Bezeichnung des Werkstücks (35), eine Bezeichnung des für dieses Werkstück bestimmten Bearbeitungsprogramms sowie die an diesem Werkstück ermittelten Messdaten elektronisch gespeichert werden, und dass die an der Palette (36) gespeicherten Daten eines für die Bearbeitung abgerufenen Werkstücks abgelesen und der Steuereinheit der Bearbeitungseinrichtung zugeführt werden, wobei anhand der Bezeichnung des Bearbeitungsprogramms das für die Bearbeitung dieses Werkstücks benötigte Bearbeitungsprogramm ausgesucht, aufgrund der Messdaten korrigiert und danach zur Steuerung der Bearbeitungseinrichtung eingesetzt wird.

Für die Durchführung dieses Verfahren eignet sich eine automatische Fabrikationsanlage der eingangs genannten Art, welche erfindungsgemäss dadurch gekennzeichnet ist, dass die Werkstücke und die Werkzeuge für den Einsatz in den Bearbeitungseinrichtungen und am Messplatz einzeln oder gruppenweise auf einheitlichen Paletten montiert sind, welche in die Bearbeitungseinrichtungen positionsgerecht einspannbar sind und auf welchen die Werkstücke auf ihrem Weg durch die Fertigungsanlage bis zur vollständigen Bearbeitung verbleiben, dass die Steuereinheiten einen Datenspeicher aufweisen, in welchem eine Mehrzahl verschiedener Bearbeitungsprogramme speicherbar sind, dass die Paletten der Werkstücke und diejenigen der Werkzeuge mit elektronischen Datenspeichern versehen sind, in denen Daten zum Identifizieren der Werkstücke bzw. Werkzeuge und Daten zum Steuern des automatischen Fertigungsablaufs speicherbar sind, dass die Handhabungsgeräte und der Messplatz mit zum Ablesen der gespeicherten Daten geeigneten Datenverarbeitungsgeräten ausgerüstet sind, und dass die Datenverarbeitungsgeräte mit den jeweils zugeordneten Steuereinheiten der Bearbeitungseinrichtungen kommunikativ verbunden sind.

Der Einsatz von Werkstück- bzw. Werkzeugpaletten, welche einheitliche mechanische Positionierungshilfen aufweisen, bildet eine günstige Voraussetzung für die Anwendung des erfindungsgemässen Identifikationssystems. Dabei kann es sich insbesondere bei den Werkstückpaletten um solche für einzelne Werkstücke oder um solche für eine Gruppe von gleichartigen Werkstücken handeln.

Im Gegensatz zu bisherigen Identifikationssystemen, welche inbezug auf den Standort der Werkstücke und Werkzeuge mit Platzkodierung arbeiten, sind beim erfindungsgemässen Identifikationssystem die Werkstücke und Werkzeuge selbst eindeutig identifizierbar. Dieser Umstand erhöht nicht nur die Sicherheit gegen Verwechslungen bei der gegenseitigen Zuordnung der Daten und der betreffenden Werkstücke bzw. Werkzeuge, sondern ermöglicht auch eine ungeordnete Ablage der Werkstücke und Werkzeuge in den betreffenden Magazinen.

Die eindeutige Identifizierung der Komponenten (Werkstücke und/oder Werkzeuge) bildet die Grundlage dafür, dass den einzelnen Komponenten zusätzliche Informationen, mitgegeben werden können, insbesondere Zieldaten für den Transport des Materials und Daten für den Abruf von Programmen für die Bearbeitung des Materials. Werkstück- bzw. Werkzeugpaletten, welche entsprechende Daten mit sich führen und diese bei Bedarf der Steuerung übermitteln können, ermöglichen erst ein vollautomatisches Arbeiten einer Fertigungsanlage mit mehreren, im Verbund betriebenen Fertigungsstationen.

Von besonderem Vorteil ist dabei, dass es nicht erforderlich ist, in den Datenspeichern der Werkstückpaletten die Bearbeitungsdaten in Form eines mehr oder weniger vollständigen Steuer- oder Bearbeitungsprogramms für die in Anspruch genommenen Bearbeitungseinrichtungen abzuspeichern. Es müssen lediglich Daten für die Identifizierung der Bearbeitungsprogramme vorhanden sein, um die jeweils benötigten, in der Steuereinheit gespeicherten Bearbeitungsprogramme abzurufen, sobald eine Palette einer Bearbeitungseinrichtung zugeführt wird. Das Speichervolumen der Datenspeicher kann dementsprechend kleiner sein.

Eine bevorzugte Ausführungsform der erfindungsgemässen Fertigungsanlage besteht überdies darin, dass die Fertigungsstationen, die Lagereinrichtung, die Transportfahrzeuge und die Umladestation einheitliche Aufnahmeplätze für die Palettenmagazine aufweisen, wobei an diesen Aufnahmeplätzen je ein Datenverarbeitungsgerät mit einem Lesekopf zum Ablesen der in den Datenspeichern der Palettenmagazine gespeicherten Daten ausgerüstet sind. Zu diesen Daten gehört insbesondere ein Fahrplan für das Palettenmagazin mit Angaben der nacheinander anzusteuernden Fertigungsstationen.

Sobald ein Palettenmagazin der Transporteinrichtung übergeben wird, kann aus dem Datenspeicher dieses Palettenmagazins das nächste Transportziel abgelesen werden. Diese Information wird nun an die Steuermittel der Transporteinrichtung weitergeleitet, welche ein mit dem Palettenmagazin beladenes Fahrzeug zu dem angegebenen Ziel, z.B. zu einer Fertigungsstation, steuert. Da die Transporteinrichtung stets über das nächste Fahrziel informiert wird, ist es nicht mehr notwendig, den Transportsteuermitteln ganze Transportprogramme einzugeben. Dadurch wird die Steuerung des Materialflusses wesentlich einfacher und flexibler.

Das erfindungsgemässe Informationsflusssystem ermöglicht es ferner auf einfache Weise, Massnahmen für eine Änderung des Fahrplans zu treffen, für den Fall, dass beispielsweise eine bestimmte Zielstation besetzt ist und deshalb nicht angefahren werden kann. Solche Massnahmen können sich auf einen Datenaustausch innerhalb des internen Datennetzes beschränken und erfordern keine Programmänderung am Prozessleitrechner. Ein Palettenmagazin, welches sein Ziel nicht fahrplanmässig erreichen kann, lässt sich in die Lagereinrichtung umleiten, von wo es zu einem späteren Zeitpunkt, z.B. auf ein Signal, welches die Freigabe der vorher besetzten Fertigungsstation ankündigt, wieder abgerufen werden kann.

Vorzugsweise sind Datenspeicher vorgesehen, welche es ermöglichen, die gespeicherten Daten während des Fabrikationsvorganges zu verändern, also beispielsweise die Daten eines Werkstücks jeweils dem aktuellen Stand der Bearbeitung anzupassen. Zu diesem Zweck kann jedes Datenverarbeitungsgerät ausser einem Lesekopf, einen Schreibkopf und eine den Lesezyklus und den Schreibzyklus steuernde Steuer- und Auswerteeinrichtung aufweisen.

Voraussetzung für einen störungsfreien Betrieb ist die Sicherheit der Datenübertragung. Mit Rücksicht auf den oft rauhen Betrieb im Bereich von Bearbeitungseinrichtungen mit deren Störeinflüssen von Öl, Spänen und Kühlmitteln ist von Vorteil, für die Datenübertragung ein System mit berührungsfreier Datenübertragung vorzusehen, wozu sich ein drahtloses Trägerfrequenzsystem besonders gut eignet.

Hinsichtlich der Energieversorgung der Datenspeicher ergibt sich eine vorteilhafte Lösung dadurch, dass Datenspeicher mit energiefreier Speicherung eingesetzt und Einrichtungen vorgesehen sind, mit denen die Energie, welche die Datenspeicher für die Datenübertragung benötigen, vom Datenverarbeitungsgerät auf den jeweils angesteuerten Datenspeicher drahtlos übertragen wird. Halbleiterspeicher dieser Art sind kostengünstig und zudem verhältnismässig klein und überall leicht zu montieren. Für die Energieübertragung ist mit Vorteil ein induktives Wechselfeld vorgesehen.

In der Zeichnung ist ein Ausführungsbeispiel der Erfindung schematisch dargestellt, und zwar zeigen:
- Fig. 1: einen Gesamtplan der automatischen Fertigungsanlage nach der Erfindung; und
- Fig. 2: Einzelheiten einer Fertigungsstation und eines Messplatzes.

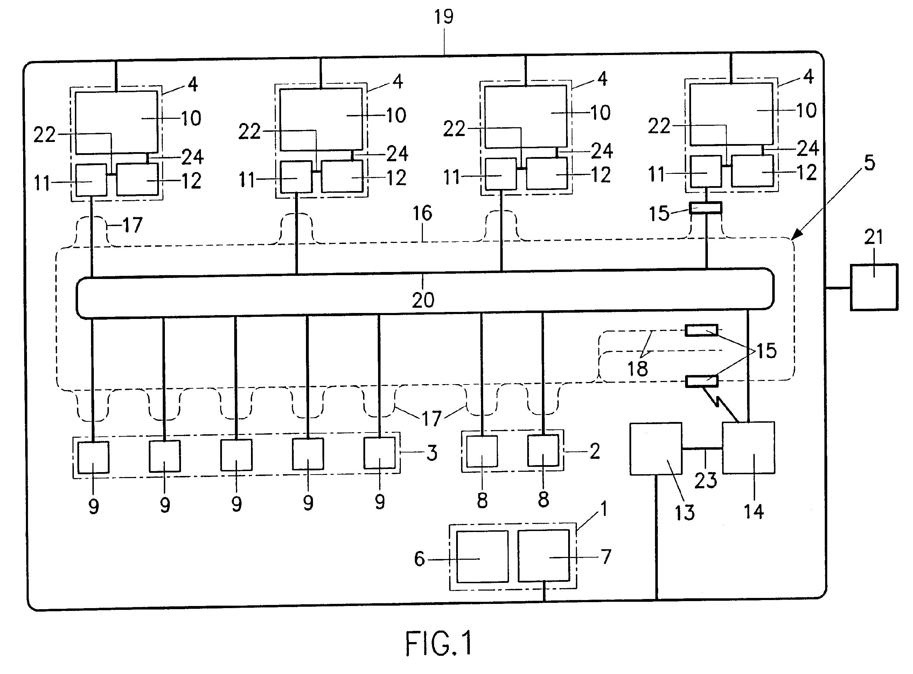

Die in Fig. 1 dargestellte Fertigungsanlage umfasst beispielsweise einen Rüstplatz 1 für die Bestückung der Paletten, eine Umladestation 2 zum Beladen und Entladen transportabler Palettenmagazine, eine Lagerstation 3 für Palettenmagazine, vier Fertigungsstationen 4 und ein Verkehrsnetz 5, welches die verschiedenen Stationen 2, 3 und 4 miteinander verbindet.

Der Rüstplatz 1 enthält einen Aufspannplatz 6, an welchem die Werkstücke und Werkzeuge auf Paletten aufgespannt werden, und einen Messplatz 7 zur Bestimmung der geometrischen Daten der auf den Paletten aufgespannten Werkstücke bzw. Werkzeuge.

An der Umladestation 2, welche zwei Plätze 8 für je ein Palettenmagazin aufweist, werden einerseits ankommende Palettenmagazine mit fertig bearbeiteten Werkstücken entladen und andererseits leere Palettenmagazine mit neu bestückten Paletten beladen.

Die Lagerstation weist eine Mehrzahl von Lagerplätzen auf, im vorliegenden Beispiel fünf Lagerplätze 9 zur vorübergehenden Lagerung von leeren oder belegten Palettenmagazinen.

Jede Fertigungsstation 4 umfasst im vorliegenden Beispiel eine Bearbeitungseinrichtung 10, im allgemeinen in Form einer numerisch gesteuerten Werkzeugmaschine, einen Platz 11 für ein Palettenmagazin, und ein Handhabungsgerät 12 für die Beschickung der Bearbeitungseinrichtung 10 mit Werkstücken und für den Werkzeugaustausch.

Das Verkehrsnetz 5 ist Teil einer automatischen Transporteinrichtung, welche eine zentrale Transportleitstation 13, eine Fernsteueranlage 14 und eine Mehrzahl von ferngesteuerten, wahlweise abrufbaren Fahrzeugen 15 umfasst. Im einzelnen besteht das Verkehrsnetz 5 aus verschiedenen, vorzugsweise schienenlosen Bahnen, längs derer die Fahrzeuge 15 geführt sind, wobei eine in sich geschlossene Bahn 16 an der Umladestation 2, an der Lagerstation 3 und an allen Fertigungsstationen 4 vorbeiführt und zu jedem Magazinplatz 8, 9 bzw. 11 der verschiedenen Stationen 2, 3 und 4 separate Bahnschleifen 17 verlegt sind, so dass mehrere Fahrzeuge gleichzeitig ohne gegenseitige Behinderung auf dem Verkehrsnetz 5 zirkulieren können. Ferner sind Abstellspuren 18 für unbenutzte Fahrzeuge 15 vorgesehen.

Das Informationsflusssystem weist zwei getrennte Datennetze auf, nämlich ein externes Datennetz 19 und ein internes Datennetz 20. Das externe Datennetz 19 verbindet die Steuereinheiten der Bearbeitungseinrichtungen 10 sämtlicher Fertigungsstationen 4 und die Transportleitstation 13 mit einem zentralen Prozessleitrechner 21 und ist für den Austausch von Prozessleitdaten zwischen dem Prozessleitrechner 21 und den Steuereinheiten der Bearbeitungseinrichtungen 10 und für den Austausch von Transportleitdaten zwischen dem Prozessleitrechner 21 und der Transportleitstation 13 vorgesehen. Das externe Datennetz 19 kann Teil eines unter der Bezeichnung "Ethernet" bekannten Datenübertragungssystems sein, an das ausser dem Prozessleitrechner z.B. ein Prozessplanungssystem angeschlossen sein kann.

Demgegenüber verbindet das interne Datennetz 20 die dem Materialflusssystem zugehörigen Anlageteile (Lagerstation 2, Handhabungsgeräte 12 und Fahrzeuge 15) miteinander, und zwar sind sämtliche Magazinplätze 8, 9 und 11 der Umladestation 2, der Lagerstation 3 und der Fertigungsstationen 4 sowie die Fernsteueranlage 14 für den Verkehr der Fahrzeuge 15 über dieses interne Datennetz 20 untereinander verbunden. Für den Datenaustausch zwischen den Magazinplätzen 11 und den Handhabungsgeräten 12 der Fertigungsstationen 4 einerseits und zwischen der Transportleitstation 13 und der Fernsteueranlage 14 andererseits sind Datenverbindungen 22 bzw. 23 vorhanden. Ausserdem ist in jeder Fertigungsstation 4 das Handhabungsgerät 12 mit der Steuereinheit der Bearbeitungseinrichtung 10 über eine einheitliche, durch die Verbindung 24 angedeutete Schnittstelle verbunden, welche Mittel zur Übersetzung des Datenprotokolls des internen Datennetzes 20 auf das Datenprotokoll der mit dem externen Datennetz 19 verbundenen Steuereinheit der betreffenden Bearbeitungseinrichtung 10 enthält.

Dem umzusetzenden Material, d.h. den mit Werkzeugen bzw. Werkstücken bestückten Paletten und den transportablen Palettenmagazinen sind Daten zur Identifierung des Materials, Zieldaten für den Transport des Materials und Daten für den Abruf von Programmen für die Bearbeitung des Materials fest zugeordnet, wobei das interne Datennetz 20 für den Austausch dieser Daten bestimmt ist. Zu diesem Zweck weisen alle Paletten und Palettenmagazine je einen Datenspeicher auf, in denen die betreffenden Daten gespeichert sind, und an allen Aufenthaltsorten der Palettenmagazine und an allen Transferstellen der Paletten sind Datenverarbeitungsgeräte vorhanden, welche mit einem Lesekopf zum belesen der gespeicherten Daten ausgerüstet sind. Den Handhabungsgeräten 12 und dem Messplatz 7 sind Datenverarbeitungsgeräte zugeordnet, welche zudem einen Schreibkopf aufweisen, um Daten in die Datenspeicher einzuschreiben, z.B. Daten, welche den Stand der Fertigung angeben.

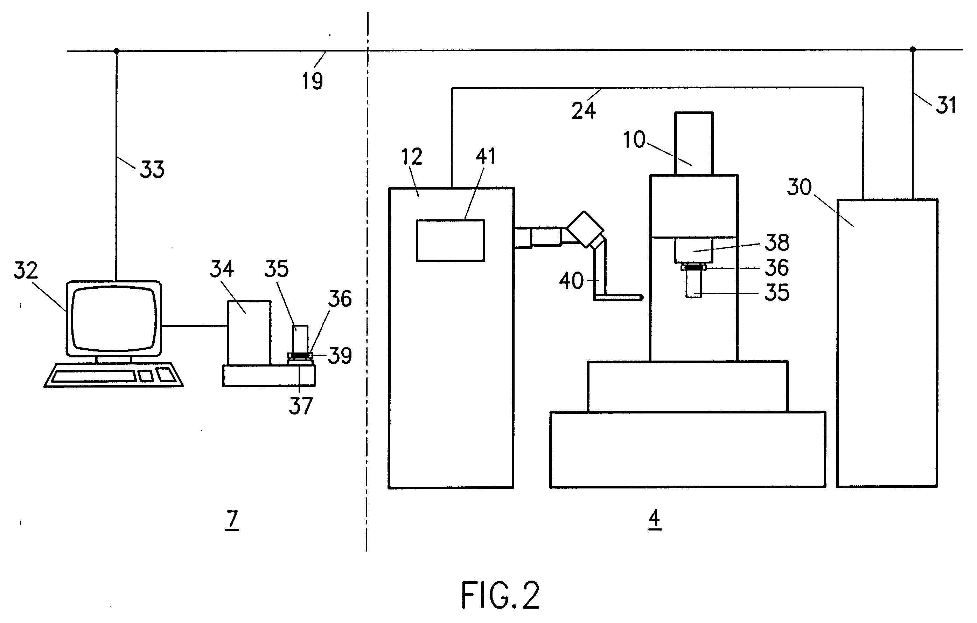

Einzelheiten einer Fertigungsstation 4 (ohne Magazinplatz 11) und des Messplatzes 7 des Rüstplatzes 1 sind in Fig. 2 dargestellt, wobei übereinstimmende Teile mit den gleichen Bezugszeichen versehen sind wie in Fig. 1.

Der Bearbeitungseinrichtung 10 ist eine Steuereinheit 30 zugeordnet, welche über eine Datenleitung 31 mit dem externen Datennetz 19 und über die Datenleitung 24 mit dem Handhabungsgerät 12 verbunden ist und welche einen Datenspeicher aufweist, in welchem eine Mehrzahl verschiedener Bearbeitungsprogramme gespeichert sind.

Der Messplatz 7 umfasst ein Computer-Terminal 32, welches über die Datenleitung 33 mit dem externen Datennetz 19 verbunden ist und an welchen ein Messgerät 34 für die Bestimmung geometrischer Daten angeschlossen ist.

Das Werkstück 35 ist auf einer inbezug auf die Positioniermittel einheitlichen Palette 36 montiert, welche an jeder Stelle, an der sich das Werkstück 35 zum tigern, Vermessen und Bearbeiten aufhält, z.B. auf einem Untersatz 37 des Messgerätes 34 und am Spannfutter 38 der Bearbeitungseinrichtung 10, positionsgerecht einspannbar ist. Die Palette 36 ist mit einem Datenspeicher 39 versehen, in welchem die zur Identifizierung und die Bearbeitung des Werkstücks 35 erforderlichen Daten gespeichert sind.

Aufgrund eines Bearbeitungsauftrags wird das dafür vorgesehene Werkstück 35 auf eine Palette aufgespannt und dem Messplatz 7 zugeführt, an welchem auch die im Auftrag spezifizierten Daten (wie Werkstückbezeichnung, NC-Programm-Bezeichnung, usw.) übertragen werden. Am Messplatz 7 findet die Voreinstellung des Werkstücks 35 statt. Dabei wird mit Hilfe des Messgerätes 34 die Position des Werkstücks 35 bezüglich seiner Palette 36 bzw. der Versatz desselben gegenüber einem der Palette 36 zugeordneten Bezugssystem festgestellt. Die Messdaten werden zusammen mit den oben genannten Auftragsdaten in dem an der Palette 36 befindlichen Datenträger 39 gespeichert. Damit sind die Messdaten einem bestimmten, identifizierbaren Werkstück fest zugeordnet, und diesbezügliche Verwechslungen sind daher ausgeschlossen. Hierauf wird die bestückte Palette an die Umladestation 2 (Fig. 1) weitergereicht, wo sie in einem Palettenmagazin untergebracht wird. An dieser Stelle wird auch der Datenspeicher des Palettenmagazins mit den erforderlichen Daten geladen, welche für die Identifierung des Palettenmagazins und den Transport desselben erforderlich sind. Ein Fahrzeug 15 übernimmt das beladene Palettenmagazin und führt dasselbe entweder direkt einer Fertigungsstation 4 oder zwischenzeitlich der Lagereinrichtung 3 zu.

Zu Beginn eines Fertigungsprogramms wird das mit bestückten Paletten beladene Palettenmagazin an den dafür vorgesehenen Aufnahmeplatz einer Fertigungsstation 4 gefahren, an dem es durch den beweglichen Greifarm 40 des Handhabungsgerätes 12 erreichbar ist. Das Handhabungsgerät 12 ist mit einem Datenverarbeitungsgerät 41 ausgerüstet, dessen Lesekopf beispielsweise mit dem beweglichen Greifarm 40 verbunden ist.

In einem Initialisierungslauf fährt der Lesekopf sämtliche Lagerpositionen im Palettenmagazin an und liest die in den Datenspeichern 39 gespeicherten Daten in den Arbeitsspeicher seines Datenverarbeitungsgerätes 41. Die Steuereinheit 30 der Bearbeitungseinrichtung 10 kann nun über die Schnittstelle zum Handhabungsgerät 12 direkt die Bezeichnung des benötigten Werkstücks 35 aufrufen, worauf das Handhabungsgerät 12 das betreffende Werkstück aus dem Palettenmagazin holt und der Bearbeitungseinrichtung 10 zuführt. Das dem Handhabungsgerät 12 zugeordnete Datenverarbeitungsgerät 41 liest mit einem Lesekopf während der Übergabe des Werkstücks 35 die im Datenspeicher 39 gespeicherten Daten und leitet diese an die Steuereinheit 30 weiter, wobei anhand der mitgeführten NC-Programm-Bezeichnung aus den in der Steuereinheit 30 gespeicherten NC-Programmen das für die Bearbeitung des Werkstücks 35 benötigte NC-Programm ausgesucht und zur Steuerung der Bearbeitungseinrichtung 10 eingesetzt wird.

Grundsätzlich in gleicher Weise kann mit den für die Bearbeitung der Werkstücke benötigten Werkzeugen verfahren werden.

Das Werkstück 35, das nach seiner Bearbeitung in der Bearbeitungseinrichtung 10 einer oder mehreren weiteren Bearbeitungseinrichtungen zuzuführen ist, kann zwischenzeitlich magaziniert werden. Das Werkstück 35 kann aber auch zunächst wieder an den Messplatz 7 oder einen anderen Messplatz befördert werden, wo es erneut vermessen wird und die neuen Messdaten in den Datenspeicher 39 an seiner Palette 36 eingelesen werden. Auch in dieser Phase können im Datenspeicher 39 zusätzliche, z.B. die Weiterbearbeitung des Werkstücks 35 betreffende Daten gespeichert werden.

## Patentansprüche

1. Verfahren zum Bearbeiten von Werkstücken in einer automatischen Fertigungsanlage mit numerisch gesteuerten Bearbeitungseinrichtungen (10), wobei die Werkstücke auf Paletten montiert werden, an denen auf die Werkstücke und deren Bearbeitung bezügliche Daten elektronisch gespeichert werden, dadurch gekennzeichnet, dass in einer jeder Bearbeitungseinrichtung (10) einzeln zugeordneten Steuereinheit (30) eine Mehrzahl von Bearbeitungsprogrammen elektronisch gespeichert wird, dass jedes Werkstück (35) vor seinem Einsatz in einer Bearbeitungseinrichtung (10) auf der Palette vermessen wird, wobei die Position des Werkstücks bezüglich seiner Palette (36) bzw. der Versatz desselben gegenüber einem der Palette zugeordneten Bezugssystem festgestellt wird, dass an der Palette (36) eine Bezeichnung des Werkstücks (35), eine Bezeichnung des für dieses Werkstück bestimmten Bearbeitungsprogramms sowie die an diesem Werkstück ermittelten Messdaten elektronisch gespeichert werden, und dass die an der Palette (36) gespeicherten Daten eines für die Bearbeitung abgerufenen Werkstücks abgelesen und der Steuereinheit der Bearbeitungseinrichtung zugeführt werden, wobei anhand der Bezeichnung des Bearbeitungsprogramms das für die Bearbeitung dieses Werkstücks benötigte Bearbeitungsprogramm ausgesucht, aufgrund der Messdaten korrigiert und danach zur Steuerung der Bearbeitungseinrichtung eingesetzt wird.

2. Automatische Fertigungsanlage mit numerisch gesteuerten Bearbeitungseinrichtungen (10), mit den Bearbeitungseinrichtungen einzeln zugeordneten Steuereinheiten (30), mit Werkzeugen zur Komplettbearbeitung von Werkstücken (35), mit Magazinen zur Aufbewahrung der Werkzeuge und der Werkstücke, mit den Bearbeitungseinrichtungen (10) zugeordneten Handhabungsgeräten (12) für die Beschickung der Bearbeitungseinrichtungen mit Werkstücken (35) und für den Werkzeugaustausch sowie mit wenigstens einem Messplatz (7), welcher für die Voreinstellung und Prüfung des Zustandes der Werkstücke (35) bzw. Werkzeuge eingerichtet ist, dadurch gekennzeichnet, dass die Werkstücke (35) und die Werkzeuge für den Einsatz in den Bearbeitungseinrichtungen (10) und am Messplatz (7) einzeln oder gruppenweise auf einheitlichen Paletten (36) montiert sind, welche in die Bearbeitungseinrichtungen (10) positionsgerecht einspannbar sind und auf welchen die Werkstücke (35) auf ihrem Weg durch die Fertigungsanlage bis zur vollständigen Bearbeitung verbleiben, dass die Steuereinheiten (30) einen Datenspeicher aufweisen, in welchem eine Mehrzahl verschiedener Bearbeitungsprogramme speicherbar sind, dass die Paletten (36) der Werkstücke (35) und diejenigen der Werkzeuge mit elektronischen Datenspeichern (39) versehen sind, in denen Daten zum Identifizieren der Werkstücke bzw. Werkzeuge und Daten zum Steuern des automatischen Fertigungsablaufs speicherbar sind, dass die Handhabungsgeräte (12) und der Messplatz (7) mit zum Ablesen der gespeicherten Daten geeigneten Datenverarbeitungsgeräten (32, 41) ausgerüstet sind, und dass die Datenverarbeitungsgeräte mit den jeweils zugeordneten Steuereinheiten (30) der Bearbeitungseinrichtungen (10) kommunikativ verbunden sind.

3. Automatische Fertigungsanlage nach Anspruch 2, dadurch gekennzeichnet, dass Datenspeicher (39) vorgesehen sind, die es ermöglichen, die gespeicherten Daten während des Fabrikationsvorganges zu verändern.

4. Automatische Fertigungsanlage nach Anspruch 2, dadurch gekennzeichnet, dass jedes Datenverarbeitungsgerät (32, 41) einen Lesekopf, einen Schreibkopf und eine den Lesezyklus und den Schreibzyklus steuernde Steuer- und Auswerteeinrichtung aufweist.

5. Automatische Fertigungsanlage nach einem der Ansprüche 2 bis 4, dadurch gekennzeichnet, dass für die Datenübertragung ein drahtloses Trägerfrequenzsystem vorgesehen ist.

6. Automatische Fertigungsanlage nach einem der Ansprüche 2 bis 5, dadurch gekennzeichnet, dass Datenspeicher mit energiefreier Speicherung eingesetzt und Einrichtungen vorgesehen sind, mit denen die Energie, welche die Datenspeicher für die Datenübertragung benötigen, vom Datenverarbeitungsgerät auf den jeweils angesteuerten Datenspeicher drahtlos übertragen wird.

7. Automatische Fertigungsanlage nach Anspruch 6, dadurch gekennzeichnet, dass für die Energieübertragung ein induktives Wechselfeld vorgesehen ist.

8. Automatische Fertigungsanlage nach Anspruch 2, dadurch gekennzeichnet, dass der Messplatz (7) zur Bestimmung geometrischer Daten der auf den Paletten (36) aufgespannten Werkstücke (35) bzw. Werkzeuge mit einem mit dem Datenspeicher (39) der Paletten (36) zusammenarbeitenden Datenverarbeitungsgerät (32) mit Lese- und Schreibkopf ausgerüstet ist.

9. Automatische Fertigungsanlage nach Anspruch 2, dadurch gekennzeichnet, dass das jedem Handhabungsgerät (12) zugeordnete Datenverarbeitungsgerät (41) mit einer mit den Datenspeichern (39) der Paletten (36) zusammenarbeitenden Lese- und Schreibeinrichtung verbunden ist und an einer einheitlichen Schnittstelle (24) Mittel zur Ubersetzung des Datenprotokolls auf das Datenprotokoll des Steuergeräts (30) der betreffenden Bearbeitungseinrichtung (10) enthält.

## Claims

1. Method for processing workpieces in an automatic manufacturing system with digitally controlled processing devices (10), the workpieces being mounted on pallets, on which data relating to the workpieces and their processing are stored electronically, characterized in that in a control unit (30) individually associated with each processing device (10), a plurality of processing programs is stored electronically, that before its introduction into a processing device (10) on the pallet, each workpiece (35) is measured, the position of the workpiece with regard to its pallet (36) or the displacement of the latter with respect to a reference system associated with the pallet being ascertained, that on the pallet (36) a designation for the workpiece (35), a designation for the processing program intended for this workpiece as well as the measuring data ascertained on this workpiece are stored electronically, and that the data stored on the pallet (36) of a workpiece called-up for processing, are read and supplied to the control unit of the processing device, whereby by means of the designation of the processing program, the processing program required for processing this workpiece is selected, corrected on the basis of the measuring data and then used for controlling the processing device.

2. Automatic manufacturing system with digitally controlled processing devices (10), with control units (30) individually associated with the processing devices, with tools for the complete processing of workpieces (35), with magazines for the storage of the tool and the workpieces, with handling devices (12) associated with the processing devices (10) for supplying the processing devices with workpieces (35) and for the exchange of tools, as well as with at least one measuring device (7) which is set up for the pre-adjustment and checking of the state of the workpieces (35) or tools, characterized in that for insertion into the processing devices (10) and at the measuring device (7), the workpieces (35) and the tools are mounted individually or in groups on uniform pallets (36), which can be clamped in the correct position in the processing devices (10) and on which the workpieces (35) remain on their path through the manufacturing system until processing is completed, that the control units (30) comprise a data store, in which a plurality of different processing programs can be stored, that the pallets (36) for the workpieces (35) and those for the tools are provided with electronic data stores (39), in which data for identifying the workpieces or tools and data for controlling the automatic manufacturing sequence can be stored, that the handling devices (12) and the measuring device (7) are equipped with data-processing devices (32, 41) suitable for reading the stored data, and that the data-processing devices are connected to communicate with the respectively associated control units (30) of the processing devices (10).

3. Automatic manufacturing system according to Claim 2, characterized in that data stores (39) are provided, which make it possible to change the stored data during the manufacturing process.

4. Automatic manufacturing system according to Claim 2, characterized in that each data-processing device (32, 41) comprises a reading head, a writing head and a control and evaluation device controlling the reading cycle and the writing cycle.

5. Automatic manufacturing system according to one of Claims 2 to 4, characterized in that a wireless carrier frequency system is provided for the data transmission.

6. Automatic manufacturing system according to one of Claims 2 to 5, characterized in that data stores with energy-free storage are used and devices are provided by which the energy, which the data stores require for the data transmission, is transmitted by wireless from the data-processing device to the respectively controlled data store.

7. Automatic manufacturing system according to Claim 6, characterized in that an inductive alternating field is provided for the energy transmission.

8. Automatic manufacturing system according to Claim 2, characterized in that for determining geometric data of the workpieces (35) clamped on the pallets (36) or tools, the measuring device (7) is equipped with a data-processing device (32) having a reading head and writing head and cooperating with the data store (39) of the pallets (36).

9. Automatic manufacturing system according to Claim 2, characterized in that the data-processing device (41) associated with each handling device (12) is connected to a reading and writing device cooperating with the data stores (39) of the pallets (36) and at a uniform interface(24) contains means for transcribing the data program onto the data program of the control unit (30) of the respective processing device (10).

## Revendications

1. Procédé pour l'usinage de pièces dans une installation de fabrication automatique avec des dispositifs d'usinage (10) à commande numérique, les pièces étant montées sur des palettes, dans lesquelles on peut mémoriser par électronique des données spécifiques aux pièces et à leur usinage, caractérisé en ce qu'un grand nombre de programmes d'usinage est mémorisé par électronique dans une unité de commande (30) attribuée individuellement à chaque dispositif d'usinage (10), en ce que chaque pièce (35) est mesurée avant son insertion dans un dispositif d'usinage (10) sur la palette, la position de la pièce par rapport à sa palette (36) et le déport de celle-ci vis-à-vis d'un système de référence attribué à la palette étant établis, en ce qu'une désignation de la pièce (35), une désignation du programme d'usinage destiné à cette pièce et les données de mesure calculées sur cette pièce sont mémorisées par électronique sur la palette (36), et en ce que les données sur la palette (36) d'une pièce appelée pour l'usinage sont lues et acheminées à l'unité de commande du dispositif d'usinage, le programme d'usinage nécessaire pour l'usinage de cette pièce étant sélectionné à l'aide de la désignation du programme d'usinage, corrigé sur la base des données de mesure puis utilisé pour la commande du dispositif d'usinage.

2. Installation de fabrication automatique équipée de dispositifs d'usinage (10) à commande numérique, des unités de commande (30) attribuées individuellement aux dispositifs d'usinage, d'outils pour l'usinage complet de pièces (35), de magasins pour conserver les outils et les pièces, des appareils de manipulation (12) attribués aux dispositifs d'usinage (10) pour l'alimentation des dispositifs d'usinage avec des outils (35) et pour le changement d'outil et d'au moins un poste de mesure (7), lequel est aménage pour le pré-réglage et le contrôle de l'état des pièces (35) et des outils, caractérisée en ce que les pièces (35) et les outils pour l'insertion dans les dispositifs d'usinage (10) et sur le poste de mesure (7) sont montés individuellement ou de façon groupée sur des palettes (36) uniformes, lesquelles peuvent être fixées dans les dispositifs d'usinage (10) avec une position adaptée et sur lesquelles les pièces (35) restent lors de leur déplacement à travers l'installation de fabrication jusqu'à l'usinage complet, en ce que les unités de commande (30) présentent une mémoire de données dans laquelle on peut mémoriser un grand nombre de différents programmes d'usinage, en ce que les palettes (36) des pièces (35) et celles des outils sont pourvues de mémoires de données (39) électroniques dans lesquelles on peut mémoriser des données pour l'identification des pièces et des outils et des données pour la commande du cycle de fabrication automatique, en ce que les appareils de manipulation (12) et le poste de mesure (7) sont équipés d'appareils de traitement de données (32, 41) appropriés pour la lecture des données mémorisées, et en ce que les appareils de traitement de données sont reliés pour communication aux unités de commande (30) respectivement affectées des dispositifs d'usinage (10).

3. Installation de fabrication automatique selon la revendication 2, caractérisée en ce qu'il est prévu des mémoires de données (39) qui permettent de modifier les données mémorisées pendant l'opération de fabrication.

4. Installation de fabrication automatique selon la revendication 2, caractérise en ce que chaque appareil de traitement de données (32, 41) présente une tête de lecture, une tête d'écriture et un dispositif de commande et d'analyse commandant le cycle de lecture et le cycle d'écriture.

5. Installation de fabrication automatique selon l'une quelconque des revendications 2 à 4, caractérisée en ce qu'il est prévu un système sans fil à courant porteur pour la transmission des données.

6. Installation de fabrication automatique selon l'une quelconque des revendications 2 à 5, caractérisée en ce qu'il est prévu des mémoires de données avec mémorisation sans énergie et des dispositifs avec lesquels l'énergie, qui est utilisée par les mémoires de données pour la transmission des données, est transmise par fil de l'appareil de traitement de données à la mémoire de données respectivement amorcée.

7. Installation de fabrication automatique selon la revendication 6, caractérisée en ce qu'il est prévu un champ alternatif inductif pour la transmission de l'énergie.

8. Installation de fabrication automatique selon la revendication 2, caractérisée en ce que le poste de mesure (7) pour la détermination de données géométriques des pièces (35) ou outils fixés sur les palettes (36) est équipé d'un appareil de traitement de données (32), travaillant de concert avec la mémoire de données (39) des palettes (36), avec tête de lecture et d'écriture.

9. Installation de fabrication selon la revendication 2, caractérisée en ce que l'appareil de traitement de données (41) attribué à chaque appareil de manipulation (12) est relié à un dispositif de lecture et d'écriture travaillant de concert avec les mémoires de données (39) des palettes (36) et, sur une interface (24) homogène, contient des moyens pour la transmission du protocole de données au protocole de données de l'appareil de commande (30) du dispositif d'usinage (10) concerné.
